# FASCICULE DE BREVET EUROPEEN

(11) **EP 3 172 266 B1**
(45) Date de publication et mention de la délivrance du brevet: **03.07.2024**
(21) Numéro de dépôt: 15759503.4
(22) Date de dépôt: 09.07.2015
(51) Int. Cl.: C08J 9/36, C08J 9/40, B01D 39/16, B01J 21/06, B01J 23/46, B01J 32/00, B01J 37/02, B01J 20/26, B01J 20/32, B01D 53/86, B01J 35/00

(54) **PROCÉDÉ DE MODIFICATION DES PROPRIÉTÉS DE SURFACE DE MOUSSES CELLULAIRES ELASTOMÈRES**
VERFAHREN ZUR MODIFIZIERUNG DER OBERFLÄCHENEIGENSCHAFTEN VON ELASTOMEREN ZELLSCHAUMSTOFFEN
METHOD FOR MODIFYING THE SURFACE PROPERTIES OF ELASTOMER CELLULAR FOAMS

(30) Priorité: 22.07.2014 FR 1457055
(43) Date de publication de la demande: 31.05.2017
(73) Titulaire: Université de Strasbourg, 67081 Strasbourg Cedex (FR); Centre National de la Recherche Scientifique, 75794 Paris Cedex 16 (FR); Université Claude Bernard Lyon 1, 69622 Villeurbanne Cedex (FR)
(72) Inventeur: EDOUARD, David, F-01120 Dagneux (FR); RITLENG, Vincent, F-67300 Schiltigheim (FR); JIERRY, Loïc, F-67000 Strasbourg (FR); CHAU DALENCON, Nguyet Trang Thanh, F-67087 Strasbourg Cedex 2 (FR)
(74) Mandataire: Brevalex
(86) Numéro de dépôt international: PCT/FR2015/051903
(87) Numéro de publication internationale: WO 2016/012689

(56) Documents cités:
- CN-A- 103 613 780
- US-A1- 2008 178 738
- BRYAN D. MCCLOSKEY ET AL: "A bioinspired fouling-resistant surface modification for water purification membranes", JOURNAL OF MEMBRANE SCIENCE, vol. 413-414, no. 414, 21 avril 2012 (2012-04-21), pages 82-90, XP055240632, NL ISSN: 0376-7388, DOI: 10.1016/j.memsci.2012.04.021
- H. LEE ET AL: "Mussel-Inspired Surface Chemistry for Multifunctional Coatings", SCIENCE, vol. 318, no. 5849, 19 octobre 2007 (2007-10-19), pages 426-430, XP055037063, ISSN: 0036-8075, DOI: 10.1126/science.1147241

## Description

### Domaine technique

L'invention concerne le domaine des matériaux solides poreux, plus particulièrement des mousses cellulaires de polymère. Elle concerne un procédé de modification de surface de mousses cellulaires élastomères, notamment de mousses à porosité ouverte, pour leur utilisation en tant que support pour catalyseurs.

### Etat de la technique

On connaît de nombreux catalyseurs dont la phase catalytique est présente dans un matériau solide poreux, et plus particulièrement adsorbé à la surface d'une mousse cellulaire céramique ou métallique. Par exemple, la méthode de réalisation de mousses céramiques la plus largement utilisée consiste en l'imprégnation d'une mousse polymérique, le plus souvent une mousse en polyuréthane ou en polyester, découpée selon la géométrie souhaitée, par une suspension de particules céramiques dans un solvant aqueux ou organique. L'excès de suspension est évacué de la mousse de polymère par l'application répétée d'une compression ou par centrifugation, afin de ne conserver qu'une fine couche de suspension sur les brins du polymère. Après une ou plusieurs imprégnations de la mousse polymérique cette dernière est séchée de façon à évacuer le solvant tout en conservant l'intégrité mécanique de la couche de poudre céramique déposée. La mousse est ensuite frittée afin d'obtenir une mousse inorganique utilisable en tant que support de catalyseur. Ce procédé de fabrication assez complexe engendre un coût de fabrication assez élevé.

Un des avantages des mousses céramiques est leur résistance chimique et thermique. Cependant, on n'a pas toujours besoin d'une excellente résistance thermique. Par ailleurs, les mousses céramiques présentent l'inconvénient de recéler des microfissurations et d'autres défauts microstructuraux abaissant considérablement leurs propriétés mécaniques. De plus, dans de nombreux cas, la récupération de la phase active métallique (catalyseur) nécessite de nombreux traitements chimiques.

CN 103 613 780 décrit un procédé de modification de surface d'une membrane microporeuse polymère hydrophobe. Le procédé comprend le trempage de la membrane microporeuse polymère hydrophobe dans une solution de modification obtenue par dissolution d'un composé pyrocatéchol et d'une molécule de polyamine dans un solvant.

Bryan D. McCloskey et al., JOURNAL OF MEMBRANCE SCIENCE, vol. 413-414, no. 414 (2012-04-21), pages 82-90 décrit le dépôt à la surface de membranes d'une couche polydopamine.

US 2008/178738 décrit des matériaux filtrants et/ou absorbants comprenant une mousse à cellules ouvertes dont la surface est au moins partiellement revêtue d'une couche comprenant du dioxyde de titane photocatalytique.

Un but de la présente invention est de fournir de nouveaux supports de catalyseurs qui soient une alternative aux supports de catalyseurs en mousses métalliques ou céramiques actuellement utilisées dans l'industrie chimique, pharmaceutique et/ou cosmétique dans des environnements qui ne nécessitent pas une résistance thermique élevée, qui soient faciles à préparer, et cela avec un faible coût de fabrication, et qui présentent des caractéristiques structurelles similaires ou avantageuses.

Un autre but de la présente invention est de fournir de nouveaux catalyseurs, pour la catalyse hétérogène et/ou homogène supportée, à faible perte de charge et présentant une grande surface spécifique, tout en présentant une très bonne inertie chimique, et qui soient disponibles sous tous types de formes géométriques (carré, plan, cylindrique, etc...) et flexibles d'un point de vue mécanique.

### Objets de l'invention

Selon l'invention le problème est résolu en modifiant chimiquement la surface d'un matériau cellulaire connu, à savoir d'une mousse polymère (en particulier élastomère) cellulaire à porosité ouverte.

Les mousses polymères cellulaires (appelées aussi « mousse alvéolaires ») sont bien connues et sont commercialement disponibles pour de nombreuses applications. Lorsqu'elles sont constituées de cellules fermées, elles présentent une excellente résistance mécanique et sont utilisées comme mousse de calage, mousse d'emballage, ou en construction mécanique. En même temps ces cellules fermées emprisonnent de l'air et confèrent ainsi aux mousses d'excellentes propriétés d'isolation thermique, qui sont exploitées dans le secteur du bâtiment.

On connaît également des mousses polymères (en particulier élastomères) à porosité ouverte (appelées « polymer open cell foam » en anglais), dans lesquelles seules les arêtes des cellules sont constituées de polymère solide. Il s'agit notamment de mousses polyuréthanes. Elles sont utilisées comme filtres, notamment dans les aquariums. Cependant, ces mousses ne sont pas utilisables comme support de catalyseur à cause de la faible adhérence des catalyseurs (ou leur composés précurseurs) sur la surface de ce polymère.

Leur utilisation en tant que support de catalyseur se heurte à la difficulté de déposer une phase catalytiquement active ou une phase de précurseur de phase active. En effet, la surface des ponts (arêtes) polymères est lisse, dépourvue de microporosité, et ne présente pas une adhérence suffisante pour y déposer les molécules précurseurs ou phases actives habituellement utilisés en catalyse homogène ou hétérogène. Pour cette raison, les mousses polymères cellulaires à porosité ouverte n'ont guère été envisagées comme candidats pour la fabrication de supports de catalyseurs.

Les inventeurs ont trouvé un traitement de surface approprié qui prépare les mousses polymères (en particulier élastomères) cellulaires, et notamment celles à porosité ouverte, à recevoir un dépôt de phase catalytiquement active (appelée ici « phase active ») ou d'une phase de précurseur de phase active.

Un premier objet de la présente invention est un procédé de modification d'une mousse polymère cellulaire à porosité ouverte, de préférence en polyuréthane, comprenant les étapes suivantes :
a) on approvisionne une mousse polymère cellulaire à porosité ouverte (a) le diamètre équivalent moyen de l'ouverture des pores de la mousse polymère cellulaire étant compris entre 100 µm et 5000 µm;
b) on met en contact ladite mousse polymère cellulaire avec au moins un composé (b) choisi parmi les composés comportant au moins un motif de catéchol, et de préférence parmi les catécholamines, pour obtenir une mousse polymère cellulaire comprenant à sa surface une phase intermédiaire formée à partir dudit composé comportant au moins un motif de catéchol.

Ladite mousse polymère cellulaire est avantageusement une mousse polyuréthane.

Dans un mode de réalisation, l'étape de mise en contact de ladite mousse polymère cellulaire (a) et du compose (b) est réalisée par immersion de ladite mousse polymère cellulaire (a) dans une solution aqueuse de composé (b), ou par imprégnation d'une solution aqueuse de composé (b) sur ladite mousse polymère cellulaire (a), ou par pulvérisation partielle ou complète d'une solution aqueuse de composé (b) sur ladite mousse polymère cellulaire (a).

Avantageusement ladite mousse polymère cellulaire (a) comporte des cellules de taille moyenne comprise entre 500 µm et 5000 µm, de préférence entre 2000 µm et 4500 µm, et encore plus préférentiellement entre 2500 µm et 4500 µm ; ces valeurs sont choisies en vue de l'utilisation des mousses en tant que support de catalyseur

Le composé (b) comporte de préférence une (et de préférence une seule) fonction amine, et est avantageusement choisi parmi les catécholamines, et est plus particulièrement le 4-(2-aminoéthyl)benzène-1,2-diol (connu sous le nom dopamine), ou un dérivé de celui-ci. A titre d'exemple, le composé (b) peut être choisi dans le groupe formé par : la dopamine, la noradrénaline, l'adrénaline, la 3,4-dihydroxyphényl-L-alanine.

Si le composé (b) n'est pas une amine, il est de préférence choisi dans le groupe de composés comportant au moins un motif de catéchol formé par : l'acide caféique, l'hydroxyhydroquinone, le catéchol, le pyrogallol, l'épigallocatéchine, l'épigallocatéchine gallate, la catéchine et ses stéréoisomères, l'acide tannique.

Le procédé selon l'invention peut comporter en outre une étape c) de fonctionnalisation de ladite mousse polymère cellulaire par dépôt d'une phase d'au moins un matériau (c) catalytiquement actif ou précurseur de phase catalytiquement active, ledit au moins un matériau (c) étant sélectionné dans le groupe constitué par :
- les complexes métalliques comportant au moins un groupement capable de former des liaisons covalentes avec le revêtement formé à partir du composé (b), c'est-à-dire avec l'élément structural catéchol ou indole (résultant de la cyclisation du bras alkylamine de la catécholamine lors de l'étape (b)), par exemple un groupement trialkoxysilane, un groupement amine ou un groupement thiol, et plus particulièrement les composés de coordination ou molécules organométalliques des métaux de transition.
- les molécules organiques capables de catalyser une réaction, appelées organo-catalyseurs, comportant au moins un groupement capable de former des liaisons covalentes avec le revêtement formé à partir du composé (b).
- les nanoparticules métalliques, de préférence les nanoparticules métalliques choisies parmi celles de Ag, Fe, Co, Ni, Ru, Rh, Pd, Ir, Pt, Au, Ce, ou celles des oxydes mixtes associés à ces éléments, telles que Fe₂O₃, NiO₂, Ni₂O₃, CeO₂, ainsi que parmi celles d'autres oxydes, telles que TiO₂, ZnO, WO₃, SnO₂, ou toutes combinaisons possibles de ces nanoparticules.

Cette étape de fonctionnalisation peut être réalisée après dépôt du composé (b) ou simultanément.

Selon un mode de réalisation, l'étape de fonctionnalisation est réalisée à une température comprise entre 5 et 80°C, de préférence entre 15 et 60°C, et encore plus préférentiellement entre 15 et 50°C.

Lesdites nanoparticules métalliques ont une taille moyenne de particules comprise entre 0,5 et 30 nm, de préférence entre 0,5 et 30 nm, plus préférentiellement entre 0,5 et 20 nm, et encore plus préférentiellement entre 0,5 et 15 nm.

Ladite phase catalytiquement active ou précurseur de phase catalytiquement active peut être déposée par l'une au moins des techniques suivantes :
- par imprégnation, par voie aérosol, ou par gouttelettes ;
- par dépôt chimique en phase vapeur ;
- par imprégnation capillaire.

Cette étape peut être réalisée après dépôt du composé (b) ou simultanément.

La mousse cellulaire mise en oeuvre dans le cadre de présente invention se présente sous la forme de blocs (par exemple cylindriques ou cubiques) ou plaques de forme quelconque, mais la plus petite dimension externe doit être significativement plus élevée que la taille moyenne des cellules, et typiquement au moins trois fois cette valeur, et de préférence au moins cinq fois. En règle générale, la plus petite dimension est supérieure à environ 3 mm, de préférence supérieure à environ 10 mm, et encore plus préférentiellement supérieure à environ 20 mm.

Un autre objet de l'invention est une mousse polymère cellulaire fonctionnalisée à porosité ouverte, susceptible d'être obtenue par le procédé selon l'invention.

Encore un autre objet de l'invention est l'utilisation d'une mousse polymère cellulaire porosité ouverte susceptible d'être obtenue par le procédé selon l'invention comme support de catalyseur.

Encore un autre objet de l'invention est l'utilisation d'une mousse polymère cellulaire fonctionnalisée à porosité ouverte susceptible d'être obtenue par le procédé selon l'invention en tant que catalyseur, et plus particulièrement en tant que catalyseur homogène supporté et/ou hétérogène.

### Description des figures

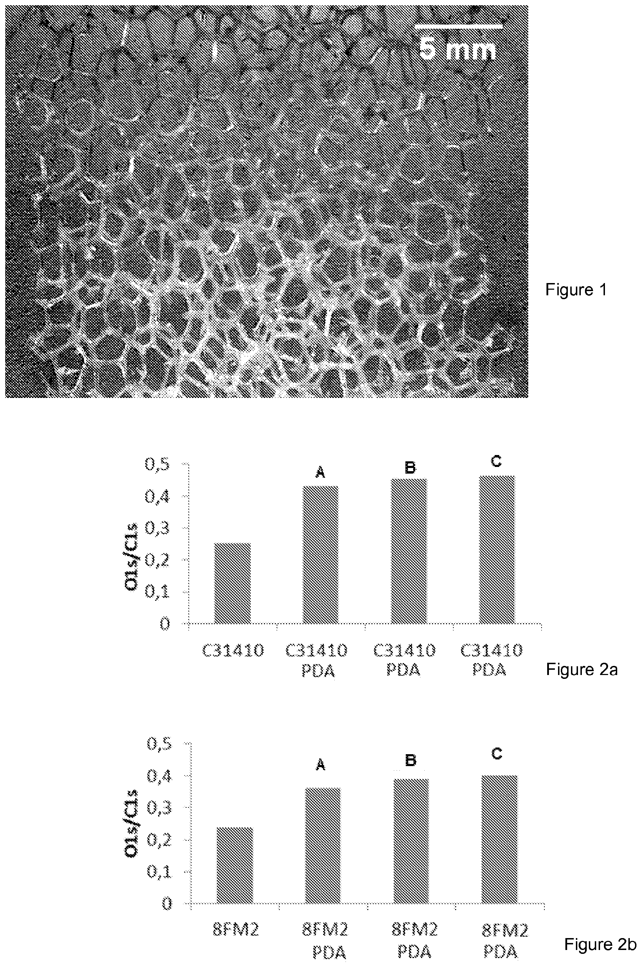

Les figures 1 à 8 illustrent l'invention.
La figure 1 (a) présente une micrographie obtenue par microscopie optique d'une mousse cellulaire à porosité ouverte en polyuréthane utilisée dans le procédé selon l'invention, dont la taille des cellules est d'environ 4,433 ± 0,362 mm ; de taille de fenêtre d'environ 2,423 ± 0,341 mm ; et de diamètre de ponts d'environ 0,460 ± 0,047 mm. La longueur de la barre blanche en haut à droite indique 5 mm.
La figure 1 (b) présente une micrographie obtenue par microscopie optique d'une mousse cellulaire à porosité ouverte en polyuréthane utilisée dans le procédé selon l'invention, identifiant les grandeurs caractéristiques de la mousse (taille des cellules « *Φ* », tailles des pores (c'est à dire taille de fenêtres) « a », et taille des ponts « *dₛ* »)
La figure 2a présente des résultats obtenus par spectroscopie de photo-électrons aux rayons X du rapport atomique O₁ₛ/C₁ₛ. mesuré à la surface de la mousse cellulaire élastomère en polyuréthane de type C31410 Bulpren ^{™} de la société Recticel ^{®} non modifiée et à plusieurs états du procédé selon l'invention (Mousse polyuréthane C31410 témoin : diagramme - ; après mise en contact avec le composé (b) et un seul lavage = barre A ; après deux lavages = barre B ; après trois lavages = barre C). On observe une augmentation de la proportion d'atomes d'oxygènes entre la mousse C31410 témoin et les mousses modifiées par le composé (b), témoin de l'adhésion de la polydopamine (appelée ici PDA) (produit de polymérisation du composé (b)). Après 1, 2 ou 3 lavages successifs, le rapport O₁ₛ/C₁ₛ reste inchangé, traduisant le caractère robuste de la modification.
La figure 2b présente des résultats obtenus par spectroscopie de photo-électrons aux rayons X du rapport atomique O₁ₛ/C₁ₛ. mesuré à la surface de la mousse cellulaire élastomère en polyuréthane de type 8FM2 de la société Foampartner ^{®} non modifiée et à plusieurs états du procédé selon l'invention (Mousse polyuréthane 8FM2 témoin : diagramme - ; après mise en contact avec le composé (b) et un seul lavage = barre A ; après deux lavages = barre B ; après trois lavages = barre C). L'augmentation de la proportion d'atomes d'oxygène par rapport à celle d'atomes de carbone entre la mousse 8FM2 témoin et les mousses modifiées par le composé (b), témoigne du greffage de la PDA (composé (b)). Ce greffage est robuste au regard de la non variation du rapport O₁ₛ/C₁ₛ mesuré après 1, 2 ou 3 étapes de lavage ; cf. barres A, B et C respectivement.

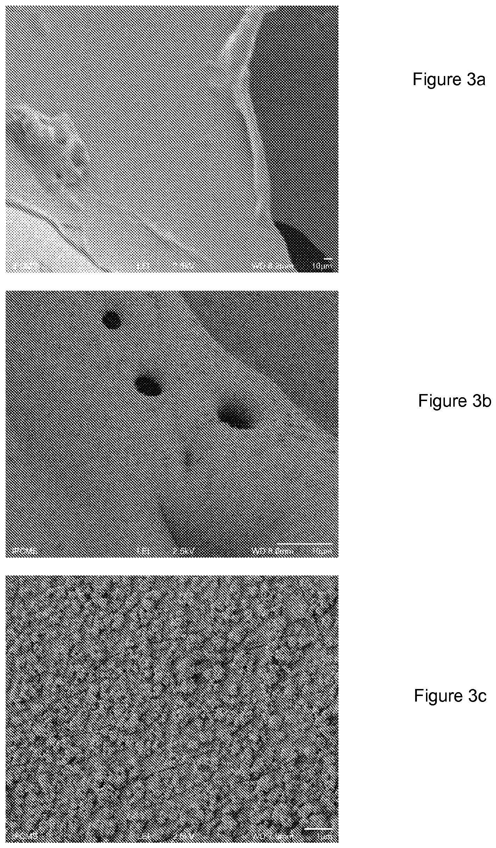

Les figures 3a, 3b, 3c présentent des micrographies obtenues par microscopie électronique à balayage (MEB) d'une mousse cellulaire élastomère en polyuréthane à différents stades du procédé selon l'invention.
La figure 3a est une micrographie de la mousse en polyuréthane non modifiée de type C31410 Bulpren ^{™} de la société Recticel ^{®}. La longueur de la barre blanche en bas à droite indique 10 µm.
La figure 3b est une micrographie de la mousse en polyuréthane montrée en figure 3a après mise en contact avec une solution aqueuse de dopamine, appelée aussi 4-(2-aminoéthyl)benzène-1,2-diol (CAS : 51-61-6). La longueur de la barre blanche en bas à droite indique 10 µm.
La figure 3c est une micrographie de la mousse polyuréthane après mise en contact de la mousse obtenue en figure 3b avec une solution aqueuse de nanoparticules de TiO₂. La longueur de la barre blanche en bas à droite indique 1 µm.
La figure 4 représente l'évolution du spectre d'absorption de l'acide orange 7 (AO7 ou 4-[(2E)-2-(2-oxonaphthalen-1-ylidene)hydrazinyl]benzenesulfonate de sodium ; CAS : 633-96-5) en présence ou non de nanoparticules de TiO₂ à t=0 et à t=22 heures, et à t=22 heures lors d'un second cycle catalytique avec la même mousse de polyuréthane réutilisée.
Les figures 5a et 5b présentent des micrographies obtenues par MEB (tension d'accélération 3,0 kV) d'une mousse cellulaire élastomère en polyuréthane vierge (figure 5a) et fonctionnalisée par un dépôt de dopamine (figure 5b) en utilisant le procédé selon l'invention. La longueur de la barre blanche en haut à droite indique 100 µm.

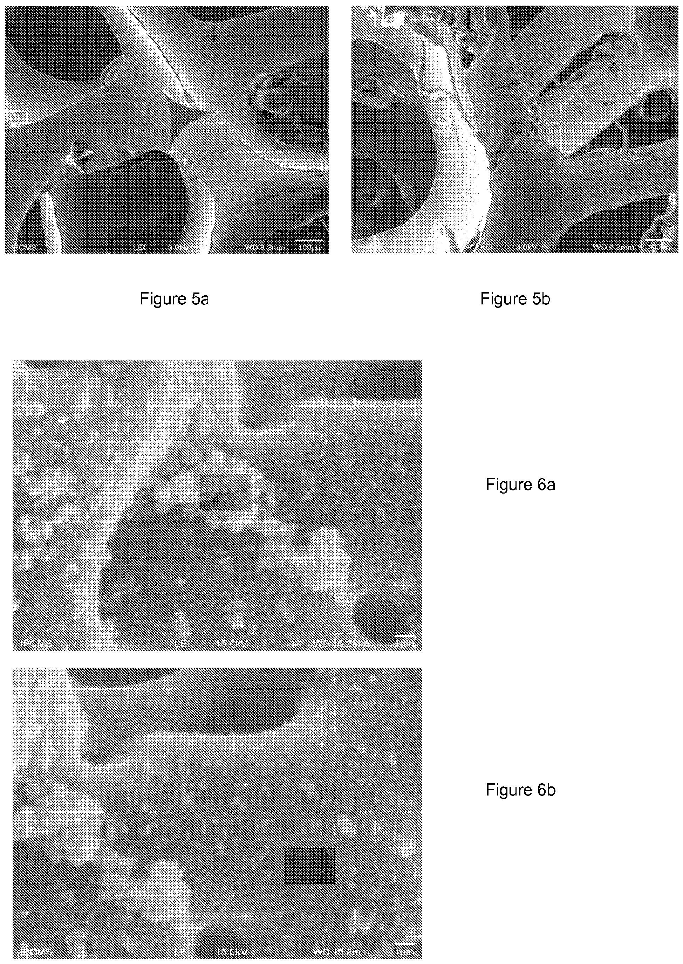

Les figures 6a et 6b présentent des micrographies obtenues par MEB (tension d'accélération 15,0 kV) d'une mousse cellulaire élastomère en polyuréthane après fonctionnalisation à la dopamine et dépôt d'une nanopoudre de TiO₂. La longueur de la barre blanche en haut à droite indique 1 µm. Un rectangle sombre sur chaque figure indique une zone dans laquelle on a analysé la composition chimique par spectroscopie EDX (émission de rayons X induite par le faisceau d'électron de l'appareil MEB) : sur la figure 6a on trouve les lignes d'émission caractéristiques des éléments C, O et Ti, sur la figure 6b seulement les lignes d'émission des éléments O et C.
Les figures 7 et 8 se rapportent à des expériences réalisées avec une mousse catalytique préparée selon l'exemple 8. La figure 8 montre la courbe de contrainte - déformation pour un échantillon neuf (courbe 1) et après 5000 cycles de compression à 25% (courbe 2).

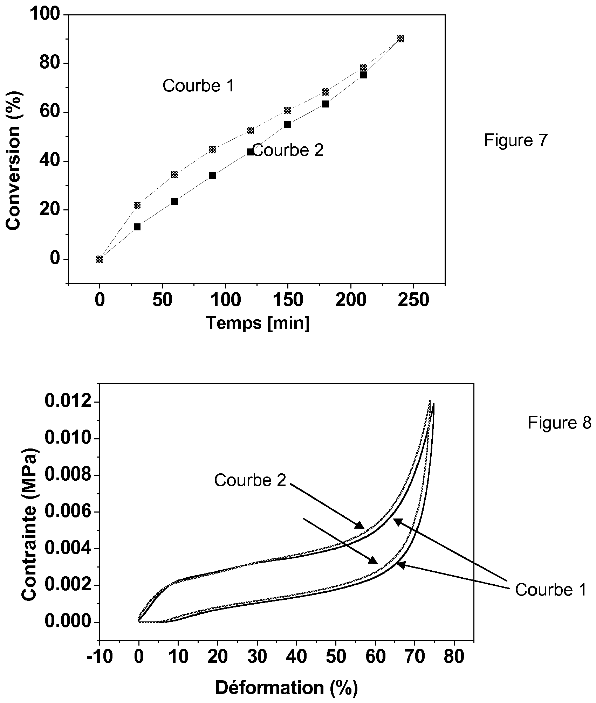

La figure 7 se rapporte à un essai de performance photocatalytique d'une mousse catalytique préparée selon l'exemple 8. Elle correspond à un test de conversion en fonction du temps pour une mousse cellulaire élastomère en polyuréthane après fonctionnalisation à la dopamine et dépôt d'une nanopoudre de TiO₂, à l'état neuf (courbe 1) et après 5 000 cycles de compression à 25% (courbe 2).

### Description détaillée de l'invention

Les mousses polymères (et en particulier élastomères) cellulaires (appelées aussi « alvéolaires ») utilisées dans le cadre du procédé selon l'invention sont des mousses dites solides à porosité ouverte. De manière préférée il s'agit de mousses en polyuréthane. Ces dernières sont commercialement disponibles en fort tonnage et à faible coût. Elles sont flexibles et particulièrement résistantes aux sollicitations mécaniques et chimiques, tout en possédant des propriétés morphologiques permettant un mélange intime des réactifs, et ainsi la réalisation de transformations chimiques en conditions douces (principalement en terme de température et de pression) comparées à des systèmes où le catalyseur est déposé sur un support de type connu ne se présentant pas sous la forme d'une mousse à porosité ouverte.

Les mousses alvéolaires ou cellulaires à porosité ouverte se présentent sous la forme de structures composées de cellules interconnectées et distribuées d'une manière aléatoire dans toute la structure du matériau. En première approximation, ces mousses cellulaires possèdent une forme géométrique de type dodécaèdre pentagonal régulier, et sont classées en fonction de leurs tailles caractéristiques (figure 1 b) :
- « *Φ* » taille moyenne des cellules, correspondant au diamètre équivalent moyen de la sphère inscrite dans la cellule ;
- « *a* » le diamètre équivalent moyen de l'ouverture des pores, appelé aussi taille des « fenêtres » ou taille des « pores » ;
- « *dₛ* » le diamètre équivalent moyen des ponts, appelé aussi longueur caractéristique du squelette solide, ici taille des « ponts ».

### Dans le commerce ces mousses sont classées en fonction du nombre de pores (fenêtres) par unité de longueur : PPI (pores per inch, soit en français pores par pouce)

Dans un mode de réalisation de la présente invention, les mousses modifiées à cellules ouvertes selon l'invention sont celles à base de mousse organique de synthèse. Cela signifie que les mousses de l'invention sont fabriquées à partir de mousses à cellules ouvertes qui comportent des matières organiques synthétiques, de préférence des mousses de polyuréthane. La préparation des mousses cellulaires en polyuréthane est bien connue de l'homme du métier. Typiquement, une telle mousse peut être obtenue par réaction de polymérisation entre un isocyanate et un alcool.

Le procédé de modification des mousses polymères (en particulier élastomères) cellulaires (ou alvéolaires) selon l'invention est un procédé de modification de leur surface. Il comprend (et de manière préférée, il comprend essentiellement) les deux étapes suivantes :
a) dans une première étape, on approvisionne une mousse polymère cellulaire (a), de préférence une mousse cellulaire élastomère en polyuréthane, à porosité ouverte,
b) dans une deuxième étape, on met en contact ladite mousse polymère cellulaire avec au moins un composé (b) choisi parmi les composés comportant au moins un motif catéchol, et de préférence parmi les catécholamines.

Avantageusement ladite mousse comporte des cellules de taille moyenne *Φ* comprise entre 500 µm et 5000 µm, de préférence entre 2000 µm et 4500 µm, et encore plus préférentiellement entre 2500 µm et 4500 µm.

Le diamètre équivalent moyen a de l'ouverture des pores (fenêtres) de la mousse polymère cellulaire est compris entre 100 µm et 5000 µm, de préférence entre 800 µm et 3000 µm. Dans un autre mode de réalisation ce paramètre se situe entre 1700 µm et 4500 µm.

Avantageusement, le diamètre équivalent moyen *dₛ* des ponts de la mousse polymère cellulaire est compris entre 50 µm et 3000 µm, de préférence entre 80 µm et 2500 µm. Dans un autre mode de réalisation ce paramètre se situe entre 200 µm et 2500 µm.

Avantageusement, le nombre de PPI sera compris entre 5 PPI et 100 PPI, de préférence entre 30 et 75 PPI

Dans un premier mode de réalisation avantageux, la taille moyenne de cellules *Φ* se situe entre 2000 µm et 4500 µm et la taille moyenne de fenêtre a entre 800 µm et 3000 µm et le diamètre moyen de ponts *dₛ* entre 80 µm et 2000 µm.

Dans un deuxième mode de réalisation avantageux, la taille moyenne de cellules *Φ* se situe entre 2500 µm et 4500 µm et la taille moyenne de fenêtre a entre 1000 µm et 3000 µm et le diamètre moyen de ponts *dₛ* entre 100 µm et 1500 µm.

Dans un troisième mode de réalisation avantageux, la taille moyenne de cellules *Φ* se situe entre 3000 µm et 5000 µm et la taille moyenne de fenêtre a entre 1300 µm et 3500 µm et le diamètre moyen de ponts *dₛ* entre 130 µm et 1750 µm.

Nous entendons ici par « catécholamine » un composé comportant un noyau de catéchol (1,2-dihydroxybenzène), le noyau benzénique comportant en outre une chaîne latérale d'alkylamine éventuellement substituée. On préfère les composants comportant une seule fonction amine, à ceux comportant plusieurs amines ou une polyamine (ou un composant dans lequel un motif catéchol réagit avec deux amines) qui devraient être évités. Selon l'invention ledit composé choisi parmi les catécholamines (qui sont de préférence des catécholmonoamines) est avantageusement la dopamine [4-(2-aminoéthyl)benzène-1,2-diol (CAS : 51-61-6)], ou un dérivé de celle-ci. D'autres composés présentant un motif catéchol et une fonction amine utilisables sont par exemple la noradrénaline, l'adrénaline et la 3,4-dihydroxyphényl-L-alanine. Cependant, d'autres molécules portant simplement le motif catéchol peuvent conduire à une modification similaire de la surface des mousses polymères alvéolaires.

Ainsi, à titre d'exemple, le composé (b) peut être choisi dans le groupe formé par : la dopamine, la noradrénaline, l'adrénaline, le 4-aminophénol, l'acide caféique, l'hydroxyhydroquinone, le catéchol, le pyrogallol, l'épigallocatéchine, l'épigallocatechine gallate, la catéchine et ses stéréoisomères, l'acide tannique, et la 3,4-dihydroxyphényl-L-alanine.

Même si la nature chimique de la polydopamine (et a fortiori de celle des produits de polymérisation des autres molécules utilisables telles qu'indiquées ci-dessus) n'est pas encore clairement établie, les inventeurs pensent que la fonction amine primaire, présente les catécholamines, jouent un rôle important dans l'initiation du processus de polymérisation : en conditions oxydantes la dopamine se transformerait en un cycle aromatique de type indole qui serait alors le véritable monomère de la polymérisation : l'amine présente dans ce dérivé indolique est une amine secondaire.

Ainsi le processus de polymérisation selon l'invention conduit à un revêtement au moins partiellement polymérisé (phase intermédiaire) présentant peu ou pas d'amines primaires libres ; cela est important pour permettre leur utilisation en catalyse. En effet, les groupements amines ou ammonium en surface ne sont pas favorables pour lier des nanoparticules métalliques ou d'oxydes. On préfère des groupes de type sulfonate, alcool ou alcoolate, acide carboxylique ou carboxylate, phénol ou phénolate. Par ailleurs, les inventeurs ont trouvé que la présence de groupes amines libres ne permet pas une fonctionnalisation des mousses comportant la phase intermédiaire selon l'invention avec d'autres molécules de type dérivés aminés ou soufrés, pour disposer encore de degrés de liberté dans la modification de leur surface en vue d'applications catalytiques variées.

Pour ces raisons, dans le cadre de la présente invention les composés de type catécholamine sont préférés aux composés comportant des motifs catéchol sans fonction azotée.

Dans un mode de réalisation du procédé selon l'invention, au moins un composé présentant au moins un motif catéchol, et de préférence un composé de la famille des catécholamines, et encore plus préférentiellement la dopamine ou 4-(2-aminoéthyl)benzène-1,2-diol, est approvisionné en solution aqueuse, avec une quantité comprise entre 0,05 % à 10 % en poids, de préférence de 0,1 % à 1 %. L'étape de mise en contact de la mousse cellulaire élastomère (a) et du compose (b) peut être réalisée par plusieurs méthodes. A titre d'exemple, le contact peut être réalisé par immersion de la mousse cellulaire élastomère (a) dans une solution aqueuse de composé (b) ; par imprégnation d'une solution aqueuse de composé (b) sur une mousse cellulaire élastomère (a); ou encore par pulvérisation partielle ou complète d'une solution aqueuse de composé (b) sur la mousse cellulaire élastomère (a).

Avantageusement, la mise en contact entre la mousse polymère cellulaire et la solution aqueuse de composé (b), notamment par imprégnation, immersion ou pulvérisation, est réalisée pendant une période de temps comprise entre 1 et 48 heures, de préférence 18 et 36 heures et encore plus préférentiellement entre 20 et 30 heures.

Avantageusement, la mise en contact de la mousse polymère cellulaire (a) et du composé (b) est réalisée dans une gamme de températures allant de 0 à 100°C, de préférence de 15 à 35°C, et de manière particulièrement préférée de 20 à 30°C.

Dans un mode de réalisation particulièrement avantageux, la mousse polymère cellulaire (a) est mise en contact avec une solution aqueuse de composé (b) à un pH compris entre 5 et 10, de préférence entre 8 et 9. Le pH de la solution peut être contrôlé par l'utilisation d'une solution tampon, par exemple une solution tampon de chlorhydrate de tris(hydroxyméthyl)aminométhane (Tris.HCl ; CAS :1185-53-1).

Avantageusement, la mise en contact de la mousse polymère cellulaire (a) et le composé (b) peut être mise en oeuvre en solution aqueuse ou dans un mélange eau/solvants organiques miscibles à l'eau. L'utilisation de l'eau en tant que solvant est préférée.

Plusieurs voies de fonctionnalisation des mousses polymères cellulaires à surface modifiée par le procédé de transformation de mousses polymères cellulaires selon l'invention ont été envisagées et testées, notamment en vue de leur utilisation comme support de catalyseur. Pour ce faire, le procédé selon l'invention comprend une étape supplémentaire c) de fonctionnalisation du support de catalyseur par dépôt d'une phase d'au moins un matériau (c) catalytiquement actif.

Dans un mode de réalisation du procédé de fonctionnalisation du support de catalyseur selon l'invention, la fonctionnalisation du support est réalisée par greffage d'un catalyseur sous forme d'un complexe métallique, notamment d'un complexe métallique comportant au moins un groupement capable de former des liaisons covalentes avec le revêtement formé à partir du composé (b), c'est-à-dire avec l'élément structural catéchol ou indole (résultant de la cyclisation du bras alkylamine de la cathécholamine lors de l'étape (b)) ; ledit groupement peut être par exemple un groupement alkoxysilane, un groupement halogénosilane (tel qu'un groupement chlorosilane), un groupement amine ou un groupement thiol, et les réactions menant la formation de liaisons covalentes peuvent être par exemple des réactions de condensation avec des fonctions hydroxyles de l'élément structural catéchol, des réactions menant à la formation d'imines, des additions de type 1,4. ou des réactions de type radicalaire.

Ledit greffage d'un complexe métallique permet l'obtention d'un catalyseur homogène supporté également appelé catalyseur hétérogène à site unique. Avantageusement, les complexes métalliques (comportant au moins un groupement capable de former des liaisons covalentes avec l'élément structural catéchol et/ou indole) utilisés dans le cadre du procédé de fonctionnalisation selon l'invention sont choisis parmi les molécules organométalliques ou les composés de coordination, et plus particulièrement parmi ceux comprenant au moins un métal de transition.

Dans un mode de réalisation du procédé de fonctionnalisation du support de catalyseur selon l'invention, la fonctionnalisation du support est réalisée par greffage d'un catalyseur sous forme d'une molécule organique (organo-catalyseur), comportant au moins un groupement capable de former des liaisons covalentes avec le revêtement formé à partir du composé (b), c'est-à-dire avec l'élément structural catéchol ou indole (résultant de la cyclisation du bras alkylamine de la dopamine lors de l'étape (b)); ledit groupement peut être par exemple un groupement alkoxysilane, un groupement halogénosilane (tel qu'un groupement chlorosilane), un groupement amine ou un groupement thiol, et les réactions menant la formation de liaisons covalentes peuvent être par exemple des réactions de condensation avec des fonctions hydroxyles de l'élément structural catéchol, des réactions menant à la formation d'imines, des additions de type 1,4. ou des réactions de type radicalaire.

Ledit greffage d'un organo-catalyseur permet l'obtention d'un organo-catalyseur supporté.

Dans un mode de réalisation du procédé de fonctionnalisation du support de catalyseur selon l'invention, la fonctionnalisation du support est réalisée par greffage non-covalent du catalyseur sous forme de particules métalliques, qui sont avantageusement des nanoparticules métalliques. Le greffage des particules métalliques en surface du support est effectif par la présence de groupements catéchols. On dispose donc ainsi d'un support de catalyseurs hétérogènes. Avantageusement, les particules métalliques utilisées dans le cadre du procédé de fonctionnalisation selon l'invention sont choisies parmi celles de Ag, Fe, Co, Ni, Ru, Rh, Pd, Ir, Pt, Au, Ce, et celles des oxydes mixtes associés à ces éléments, par exemple, Fe₂O₃, NiO₂, Ni₂O₃, CeO₂, ainsi que parmi celles d'autres oxydes comme TiO₂, ZnO, WO₃, SnO₂, et toutes combinaisons possibles de ces nanoparticules. Avantageusement, les nanoparticules métalliques utilisées dans le cadre du procédé selon l'invention ont une taille moyenne de particules comprise entre 0,5 et 100 nm, de préférence 0,5 et 20 nm, et encore plus préférentiellement entre 0,5 et 15 nm. La prise en considération de la taille des nano-objets catalytiques utilisés peut dépendre de leur composition, et notamment de leur caractère métallique ou d'oxyde : les propriétés surfaciques sont fortement liées à la taille des nanoparticules métalliques (d'or et de ruthénium par exemple), moins fortement dans le cas des oxydes (TiO₂).

De préférence, l'étape de fonctionnalisation du support de catalyseur est réalisée par le dépôt de la phase active selon au moins l'une des techniques suivantes :
- par imprégnation, par voie aérosol, ou par gouttelettes ;
- par dépôt chimique en phase vapeur ;
- par imprégnation capillaire.

Cette étape de fonctionnalisation peut être réalisée après dépôt du composé (b) ou simultanément.

Avantageusement, l'étape de fonctionnalisation du support de catalyseur est réalisée à une température comprise entre 5 et 80°C, de préférence entre 15 et 60°C, et encore plus préférentiellement entre 15 et 50°C.

L'invention permet d'apporter des améliorations notables par rapport aux catalyseurs hétérogènes supportés sur des mousses cellulaires rigides, par exemple des mousses en carbone, des mousses en carbure de silicium, des mousses métalliques, ou des mousses en alumine. En effet, les mousses en polyuréthane, qui sont des mousses élastomères, présentent une grande flexibilité et une meilleure résistance aux chocs comparés aux mousses métalliques ou en céramiques typiquement utilisées. De plus, les phases actives des mousses cellulaires obtenues par le procédé selon l'invention peuvent être aisément récupérées, par exemple par une simple combustion des mousses cellulaires, ce qui est un avantage non négligeable notamment lorsque les matériaux utilisés en tant que phase active sont très coûteux. Pour les mousses cellulaires métalliques ou céramiques selon l'état de la technique, la récupération de la phase active nécessite des traitements chimiques complexes et polluants.

Une particularité des supports de catalyse selon l'invention est liée au choix du composé (b) qui est choisi parmi les composés présentant au moins un motif catéchol, et préférentiellement parmi les catécholamines. En effet, l'inconvénient principal des mousses polymères en vue d'une utilisation comme support de catalyseur est leur faible tenue en température : il n'est pas possible de soumettre les précurseurs de phase active (par exemple oxydes métalliques) déposés sur ces supports aux mêmes traitements d'activation (typiquement : réduction sous hydrogène) que lorsqu'ils sont déposés sur une mousse métallique ou céramique car cette réaction exige une température qui risque de dégrader la mousse polymère. C'est l'une des principales raisons pour lesquelles les mousses polymères cellulaires à porosité ouverte n'ont pas été utilisées en tant que support de catalyseur (l'autre raison étant la faible adhérence des précurseurs de phases active ou phases actives dû au caractère lisse de la surface des ponts qui forment la mousse alvéolaire). Les inventeurs ont trouvé que la modification de la surface des mousses polymères cellulaires selon l'invention par un composé présentant au moins un motif de catéchol, et préférentiellement choisi parmi les catécholamines (tel que la dopamine), permet de surmonter ces deux difficultés la fois. En particulier il est possible de s'affranchir de la phase de réduction du précurseur de phase active déposé sur ladite mousse polymère car les catécholamines agissent comme agent réducteur ; cet effet est plus prononcé lorsque ledit précurseur de phase active est déposé sous la forme de nanoparticules. Par ailleurs, la présence d'un composé présentant au moins un motif de catéchol, et en particulier la présence d'une catécholamine, stabilise les nanoparticules dans leur intégrité chimique, notamment par rapport à l'action oxydante de l'air qui peut dégrader ou désactiver les nanoparticules.

Par ailleurs, lorsque la mousse polymère cellulaire modifiée susceptible d'être obtenue par le procédé selon l'invention est utilisée en tant que catalyseur homogène supporté ou en tant qu'organo-catalyseur supporté (ce qui est impossible avec des mousses métalliques ou céramiques qui ne peuvent servir que de supports de catalyseurs métalliques hétérogènes), la séparation des produits et du catalyseur est grandement facilitée par rapport aux catalyseurs non supportés utilisés notamment en chimie fine ou dans les réactions d'hydroformylation, ce qui permet le passage à l'échelle industrielle pour des réactions pour lesquelles il aurait été inenvisageable de les utiliser en conditions homogènes, dû notamment à la difficulté de séparer le catalyseur homogène des produits de la réaction. En effet, dans certains secteurs de la chimie, tel que la chimie pharmaceutique, le taux de métal résiduel (en provenance d'un catalyseur métallique) dans le produit obtenu par catalyse ne doit pas dépasser un seuil qui se situe à un niveau très faible.

Le procédé selon l'invention permet des réactions catalytiques dans des conditions de température et de pression plus « douces » que dans un réacteur traditionnel (réacteur discontinu, semi-continu ou fermé, appelé en anglais « batch reactor ») grâce aux propriétés de transfert de matière de la mousse, notamment dans le cas de réactions biphasiques (gaz/liquide), comme en hydrogénation ou hydroformylation.

Ainsi, les mousses cellulaires modifiées, susceptibles d'être obtenues par le procédé selon l'invention, présentent de nombreux avantages par rapport aux mousses métalliques ou céramiques rigides actuellement utilisées en tant que support de catalyseur dans l'industrie chimique, pharmaceutique et/ou cosmétique. En effet, les mousses métalliques ou céramiques rigides présentent un certain nombre de limitations. En particulier, elles manquent de flexibilité : les mousses métalliques ou céramiques classiquement utilisées sont très cassantes. Par ailleurs, le choix de types de catalyseurs pouvant être supportés est limité à des (nano)particules métalliques adsorbées en surface, donc à des catalyseurs métalliques hétérogènes seulement. De plus, les catalyseurs déposés sur ces supports connus ne sont pas très durables, leur vieillissement est dû principalement à la désorption et l'oxydation de l'espèce métallique sur la mousse. Et finalement, les mousses métalliques ou céramiques rigides sont assez chères.

Les mousses polymères cellulaires modifiées selon l'invention par la mise en contact avec au moins un composé choisi parmi les catécholamines peuvent subir d'autres fonctionnalisations chimiques, par exemple par le greffage covalent de composés comportant des groupes silanes, des groupes amines ou des groupes thiols. Cela permet d'élargir encore le spectre de propriétés de surface que l'on peut conférer par le procédé selon l'invention aux mousses polymères cellulaires.

### Exemples :

L'invention est illustrée ci-dessus par huit exemples qui cependant ne limitent aucunement l'invention.

L'exemple 1 porte sur la mise en contact d'une mousse cellulaire en polyuréthane avec une solution aqueuse de dopamine.

L'exemple 2 porte sur la fonctionnalisation de la mousse cellulaire obtenue à l'exemple 1 avec une solution aqueuse de fluoresceinamine.

L'exemple 3 porte sur la fonctionnalisation de la mousse cellulaire obtenue à l'exemple 1 avec une suspension en milieu aqueux de nanoparticules de dioxyde de titane TiO_{2.} L'exemple 4 porte sur la fonctionnalisation de la mousse cellulaire obtenue à l'exemple 1 avec une suspension en milieu aqueux de nanoparticules de ruthénium (Ru(0)). L'exemple 5 porte sur la photocatalyse de l'acide orange 7 en utilisant la mousse cellulaire fonctionnalisée obtenue à l'exemple 3.

L'exemple 6 porte sur des tests d'hydrogénation du styrène utilisant la mousse cellulaire fonctionnalisée obtenue en exemple 4.

L'exemple 7 porte sur la fonctionnalisation d'une mousse cellulaire en polyuréthane modifiée par la dopamine, par l'addition-1,4 de type Michael d'un thiol ou par la réaction de base de Schiff (et/ou par l'addition-1,4 de type Michael) d'une amine.

L'exemple 8 porte sur une fonctionnalisation combinée en une étape d'une mousse cellulaire en polyuréthane avec une solution aqueuse de dopamine contenant des nanoparticules de dioxyde de titane TiO₂.

Dans ces exemples, certaines abréviations ont été utilisées :
PU : Mousse en polyuréthane
PDA : Polydopamine
PU-PDA : Mousse en polyuréthane comprenant à sa surface une phase intermédiaire en polydopamine.
Ru : Ruthénium
PU-PDA-Fluo : Mousse en polyuréthane comprenant une phase intermédiaire en polydopamine et une phase supérieure constituée de fluoresceinamine.
PU-PDA-Ru(0) : Mousse en polyuréthane comprenant une phase intermédiaire en polydopamine et une phase active catalytique constituée de nanoparticules de ruthénium.
PU-PDA-TiO₂ : Mousse en polyuréthane comprenant une phase intermédiaire en polydopamine et une phase active catalytique constituée de nanoparticules de dioxyde de titane.
t.a. : température ambiante

### Exemple 1 : Procédure type pour le greffage de polydopamine (PDA) sur la surface de mousse de polyuréthane (PU) pour obtenir une mousse PU-PDA

Dans l'exemple 1, un support polyvalent pour catalyseurs hétérogènes ou catalyseurs homogènes supportés a été obtenu par mise en contact d'une mousse cellulaire élastomère en polyuréthane avec une solution de dopamine, lequel procédé correspond au schéma réactionnel 1 ci-après :

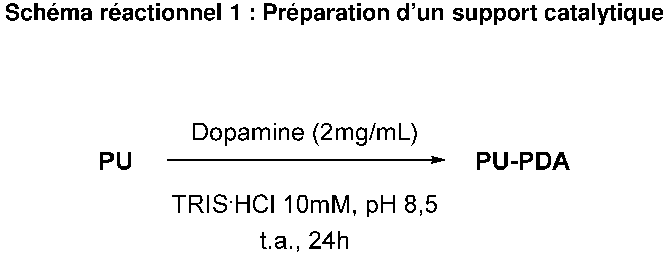

Dans une solution agitée de chlorhydrate de 4-(2-aminoéthyl)-1,2-benzènediol (CAS : 62-31-7, appelé aussi chlorhydrate de dopamine), préparée par dissolution de chlorhydrate de dopamine (2 mg/mL) dans une solution aqueuse (60 mL) de tris(hydroxyméthyl)aminométhane (appelé parfois « Tris » ; CAS 77-86-1) à une concentration molaire de 10 mM dont le pH est ajusté à 8,5 par addition au goutte à goutte d'une solution aqueuse de HCl à 1 M, est immergée un échantillon de mousse de polyuréthane C31410 Bulpren ^{™} de la société Recticel ^{®} ou 8FM2 de la société Foampartner ^{®} de taille 2×2×2 cm³ et de masse comprise entre 200 et 250 mg. Le mélange réactionnel est agité à température ambiante pendant 24 heures. Le processus de polymérisation de dopamine en polydopamine est caractérisé par le changement de la couleur du milieu réactionnel en brun foncé. La mousse de polyuréthane greffée avec la polydopamine (PU-PDA) est ensuite rincée avec de l'eau ultrapure (MiliQ), puis agitée dans 50 mL d'eau MiliQ pendant 10 min. La procédure de lavage est répétée 5 fois. La couleur brunâtre persistante à la surface de la mousse est caractéristique du greffage efficace de la PDA. Le produit obtenu est séché par flux d'air comprimé, puis à l'étuve (60-70°C) pendant une nuit.

Des analyses de la surface de la mousse obtenue par spectroscopie de photo-électrons aux rayons X (XPS) confirment l'adsorption de la polydopamine à la surface de la mousse en polyuréthane C31410 Bulpren ^{™} de la société Recticel ^{®} et 8FM2 de la société Foampartner ^{®} (cf. figures 2a et 2b). L'augmentation significative du rapport atomique O(1s)/C(1s) mesuré par XPS entre les mousses élastomères non modifiées et modifiées attestent de la présence de PDA et de sa résistance au lavage. En outre, des analyses de microscopie électronique à balayage (MEB) confirment la présence de PDA à la surface de la mousse C31410 Bulpren ^{™} de la société Recticel ^{®} (cf. figures 3a et 3b).

### Exemple 2 : Procédure type pour le greffage de fluoresceinamine sur la surface de mousse de polyuréthane fonctionnalisée avec la polydopamine (PU-PDA)

Dans cet exemple, la mousse PU-PDA obtenue à l'exemple 1 a été fonctionnalisée avec une solution aqueuse de fluoresceinamine pour former un composé fluorescent appelé PU-PDA-Fluo. Cet exemple a notamment pour objectif de démontrer que l'on peut fonctionnaliser la polydopamine par réaction avec un groupement amine (par réaction de base de Schiff et/ou addition-1,4 de type Michael), ce qui permet d'envisager la fonctionnalisation de PU-PDA avec n'importe quelle molécule comportant un groupement amine dont les complexes métalliques. Ce composé fluorescent permet en effet de visualiser aisément la fonctionnalisation de la couche de polydopamine formée en surface de la mousse de polyuréthane par des techniques de microscopie optique à fluorescence.

A une solution agitée de 5-aminofluorescéine (CAS : 3326-34-9, appelé aussi fluorescéinamine, isomère I), préparée par dilution de 5-aminofluorescéine (0,5 mg/mL) dans une solution aqueuse de Tris·HCl à 10 mM (pH 8,5, 60 mL) préparée selon l'exemple 1, est immergée la mousse de PU-PDA préparée selon l'exemple 1. Le mélange réactionnel est agité et chauffé à 60°C pendant 3 heures, puis agité à température ambiante pendant 16 heures. La mousse de PU-PDA greffée avec le fluoresceinamine (PU-PDA-fluoresceinamine) est ensuite rincée avec de l'eau ultrapure (MiliQ), puis agitée dans 50 mL d'eau MiliQ pendant 10 min. La procédure de lavage est répétée 3 fois. Le mousse PU-PDA-Fluo ainsi obtenue est séchée par flux d'air comprimé, puis est gardée à température ambiante. L'analyse par la microscopie à fluorescence (excitation à 365 nm) confirme la présence de la fluoresceinamine à la surface de mousse PU-PDA-Fluo ; la couche est continue et homogène. L'intensité de fluorescence (mesurée à l'aide du logiciel Image*J*^{®}) sur une surface donnée est deux fois supérieure lorsque la mousse de PU-PDA est modifiée par la fluoresceinamine, par rapport à la même mousse non modifiée.

En outre, la présence de la fluoresceinamine à la surface de mousse PU-PDA-Fluo a également été démontrée par XPS. Une diminution de 34% du rapport atomique O(1s)/C(1s) et de 14% du rapport N(1s)/C(1s) entre la mousse PU-PDA et la mousse PU-PDA-Fluo atteste du greffage du dérivé aminé.

Une expérience similaire a été réalisée avec la mousse polyuréthane 8FM2 de la société Foampartner ^{®}, avec un résultat similaire.

### Exemple 3 : Procédure type pour le greffage de nanoparticules de TiO₂ sur la surface de mousse de polyuréthane fonctionnalisée avec la polydopamine (PU-PDA)

Dans cet exemple, la mousse PU-PDA obtenue à l'exemple 1 a été fonctionnalisée avec une suspension en milieu aqueux de nanoparticules métalliques de dioxyde de titane pour former un catalyseur appelé PU-PDA-TiO₂.

A une solution aqueuse de Tris.HCl 10 mM (pH 8,5, 50 mL) préparée selon l'exemple 1, est additionnée 1 gramme d'une nanopoudre commerciale de TiO₂ (de type anatase et de taille de particules d'environ 15 nm). Après avoir été agitée pendant la nuit à 1000 tours/minute en utilisant un agitateur magnétique, la suspension de TiO₂ est traitée par ultrason pendant 30 minutes dans un bain d'eau (25°C) pour obtenir une suspension bien dispersée de nanoparticules de TiO₂. Dans cette suspension de nanoparticules de TiO₂ est immergée la mousse de PU-PDA préparée selon l'exemple 1, puis le mélange réactionnel est agité à environ 1000 tours/minute et chauffé à 40°C pendant 3 heures. La mousse de PU-PDA greffée avec les nanoparticules de TiO₂ (PU-PDA-TiO₂) est ensuite rincée avec de l'eau ultrapure MiliQ, puis agitée dans 50 mL d'eau MiliQ pendant 10 min. La procédure de lavage est répétée 5 fois. Le produit obtenu (PU-PDA-TiO₂) est séché par flux d'air comprimé, puis à l'étuve (60-70°C) pendant une nuit.

Les analyses de spectrométrie photoélectronique (%Ti₂ₚ /%C₁ₛ = 0,09871) et de microscopie électronique à balayage (MEB), confirment la présence de nanoparticules de TiO₂ à la surface de mousse PU-PDA (cf. figures 3c, 6a et 6b).

### Exemple 4 : Procédure type pour le greffage de nanoparticules de Ru(0) sur la surface de mousse de polyuréthane fonctionnalisée avec la polydopamine (PU-PDA)

Dans cet exemple, la mousse PU-PDA obtenue à l'exemple 1 a été fonctionnalisée avec une suspension en milieu aqueux de nanoparticules métalliques de ruthénium pour former un catalyseur appelé PU-PDA-Ru(0). Le schéma réactionnel de la préparation de cette mousse est présenté ci-après :

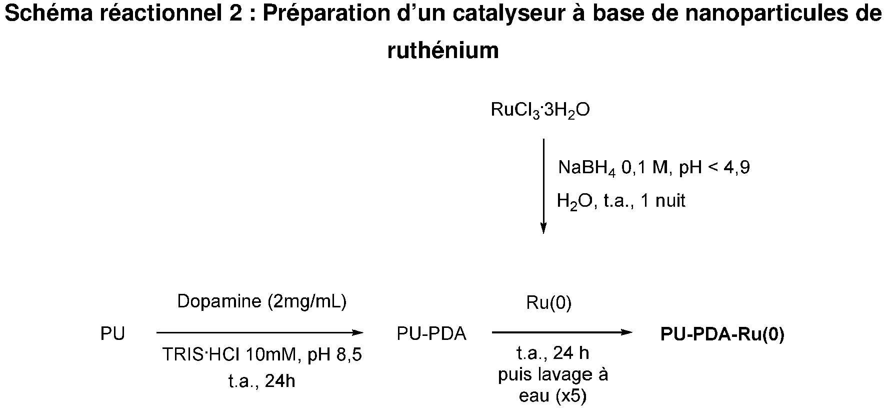

A une solution aqueuse (50 mL) de RuCl₃.3H₂O (26,1 mg ; 0,1 mM), est additionnée goutte à goutte une solution aqueuse fraîchement préparée (1,8 mL) de NaBH₄ à 0,1 M sous agitation vigoureuse et à température ambiante. Le processus de réduction se produit rapidement et est caractérisé par le changement progressif de couleur ; de brun foncé à brun clair puis vert-brun et enfin brun foncé à nouveau. L'addition de NaBH₄ est terminée quand le milieu réactionnel est redevenu brun foncé (pH < 4,9). La solution colloïdale est ensuite agitée pendant une nuit à température ambiante pour obtenir une suspension bien dispersée de nanoparticules de ruthénium(0), de taille de particules comprise entre 1 et 2 nm.

Dans cette suspension de nanoparticules de ruthénium, est immergée la mousse de PU-PDA préparée selon l'exemple 1, puis le mélange réactionnel est agité à température ambiante pendant 24 heures. La mousse de PU-PDA greffée avec les nanoparticules de ruthénium(0) (PU-PDA-Ru(0)) est ensuite rincée avec de l'eau MiliQ, puis agitée dans 50 mL d'eau MiliQ pendant 10 min. La procédure de lavage est répétée 5 fois. PU-PDA-Ru(0) est séchée par flux d'air comprimé, puis à l'étuve (60-70°C) pendant une nuit.

### Exemple 5 : Photocatalyse de l'acide orange 7 utilisant PU-PDA-TiO₂ comme catalyseur

Dans cet exemple, un test de photocatalyse de l'acide orange 7 (AO7) a été réalisé en utilisant la mousse cellulaire PU-PDA-TiO₂ obtenue à l'exemple 3. Le schéma réactionnel est présenté ci-après :

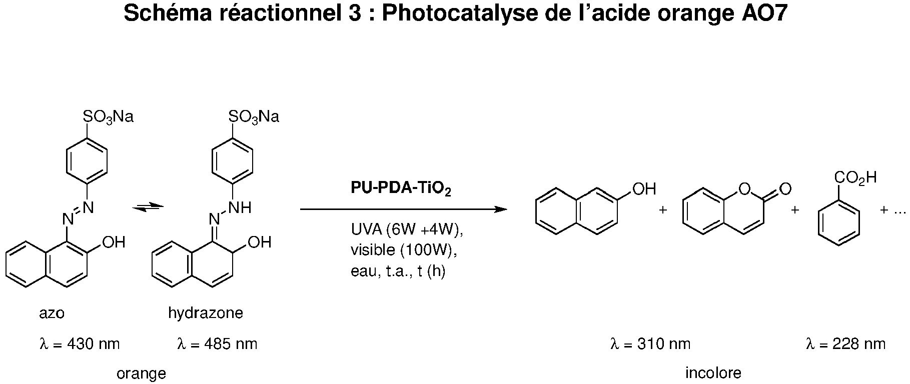

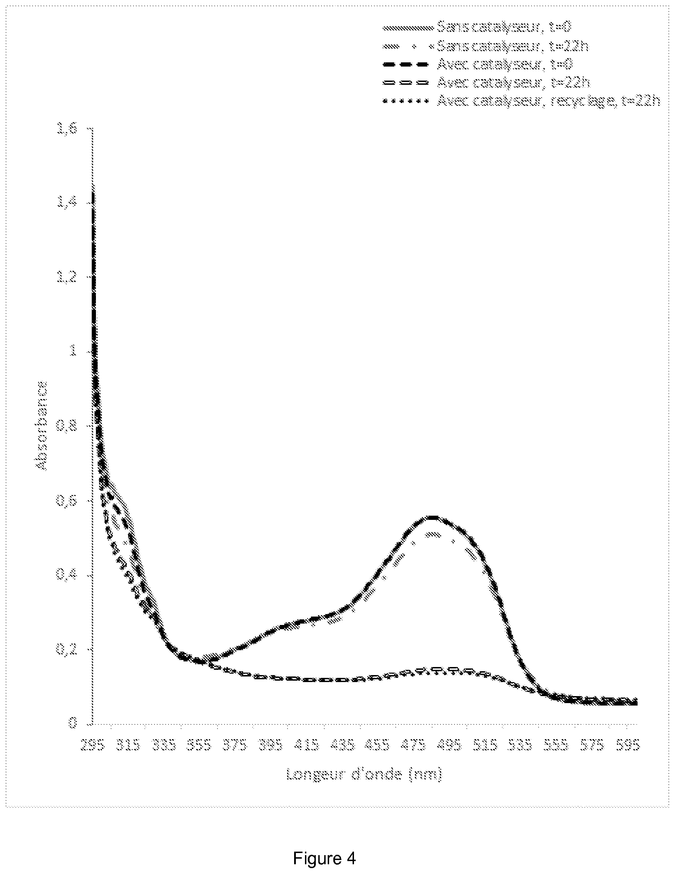

Dans une solution aqueuse (50 mL) de 4-(2-hydroxy-1-naphthylazo)benzenesulfonate de sodium (CAS : 633-96-5, appelé usuellement acide orange 7 ou AO7) à une concentration de 2,7.10⁻⁵ M (pH ~ 5,4) placée dans un bécher de 100 mL, sont immergés quatre échantillons de mousses de PU-PDA-TiO₂ (précédemment préparée selon l'exemple 3, et de taille = 0,5 × 2 × 2 cm³). La solution est agitée à 250 tours/minute en utilisant un agitateur magnétique dans le noir pendant 30 minutes pour équilibrer, puis irradiée par 3 lampes (1 lampe visible à 100 W placée au-dessus, et 2 lampes UVA (λₘₐₓ = 365 nm) respectivement à 6 W et 4 W, placées de côtés). Le milieu réactionnel est agité pendant 22 heures. La transformation catalytique de l'AO7 se caractérise par la décoloration de la solution et est suivie par spectrophométrie UV-visible (cf. spectres UV - figure 4). Cette conversion catalytique est totale en 22 heures, et les mousses peuvent être réutilisées au moins une fois après lavage à l'eau ultrapure (MiliQ) sans perte d'activité.

### Exemple 6 : Hydrogénation du styrène utilisant PU-PDA-Ru(0) comme catalyseur

Dans cet exemple, l'hydrogénation du styrène 1 en éthylbenzène 2 a été réalisée en utilisant la mousse cellulaire PU-PDA-Ru(0) obtenue à l'exemple 4. Le schéma réactionnel est présenté ci-après :

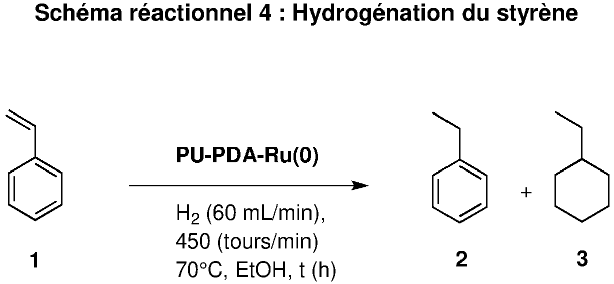

Selon l'état de la technique cette réaction peut former comme produit secondaire du éthylcyclohexane **3.**

L'hydrogénation du styrène **1** est réalisée dans un réacteur tétra-col en verre (250 mL) équipé d'un condenseur. La mousse de PU-PDA-Ru(0) est fixée au bout de l'agitateur mécanique dans une cage trouée en verre. Le catalyseur est plongé dans une solution de styrène (0,23 mL ; 0,02M) dans de l'éthanol (100 mL). Le milieu réactionnel est chauffé à 70°C sous agitation mécanique (environ 450 tours/minute) et l'hydrogène est bullé en continu dans la solution avec un débit de 60 mL/min. 0,5 mL du milieu réactionnel sont prélevés après 6 et 22 heures de réaction et analysés par chromatographie en phase gazeuse pour déterminer la conversion. Après 6 heures de réaction, 4% d'éthylbenzène **2** est obtenu ; après 22 heures de réaction, 7% d'éthylbenzène **2** est obtenu. La quantité de éthylcyclohexane **3** formé a été négligeable, ce qui souligne la sélectivité de la réaction avec ce système catalytique.

Cet exemple démontre aussi que dans le cas de l'utilisation de la dopamine comme composé (b) dans le procédé selon l'invention, il est possible de s'affranchir de l'étape de réduction de la phase active (Ru). Cette étape est nécessaire voire indispensable dans le cas des systèmes selon l'état de la technique où le catalyseur est déposé sur un support de type céramique, carbone ou métallique.

### Exemple 7 : Fonctionnalisation des mousses PU-PDA par greffage d'un thiol ou d'une amine

Sur une mousse en polyuréthane C31410 Bulpren ^{™} de la société Recticel ^{®} modifiée avec la polydopamine (PU-PDA) on a greffé du HS-(CH₂)₂-COOH via l'addition-1,4 de Michael de la fonction thiol sur le cycle aromatique de la PDA. Pour cela on a utilisé du HS-(CH₂)₂-COOH à raison de 0,5 mg/mL dans une solution aqueuse de NaOH (0,1 M) à la température ambiante. La présence du thiol sur la mousse PU-PDA ainsi modifiée a été démontrée par XPS. L'augmentation significative du rapport atomique S(2p)/C(1s) mesuré par XPS entre la mousse PU-PDA non modifiée et la mousse PU-PDA modifiée atteste de la présence du thiol. La même expérience a été faite avec la mousse polyuréthane 8FM2 de la société Foampartner ^{®} avec un résultat similaire.

Dans une autre expérience, on a greffé sur une mousse en polyuréthane C31410 Bulpren ^{™} de la société Recticel ^{®} modifiée avec la polydopamine (PU-PDA) du NH₂-(CH₂)₆-NH₂ via une réaction de base de Schiff (et/ou une addition-1,4 de Michael). Pour cela on a utilisé du NH₂-(CH₂)₆-NH₂ dans les conditions suivantes : à raison de 0,5 mg/mL dans une solution aqueuse de Tris (15 mM) à pH 8,6 à 60°C pendant 3h, suivi de 16 h à t.a.. La présence de l'amine sur la mousse PU-PDA ainsi modifiée a été démontrée par XPS. La diminution de 14% du rapport atomique O(1s)/C(1s) et l'augmentation de 63% du rapport atomique N(1s)/C(1s) mesurés par XPS entre la mousse PU-PDA non modifiée et la mousse PU-PDA modifiée atteste de la présence de l'amine. Une expérience similaire a été réalisée avec la mousse polyuréthane 8FM2 de la société Foampartner ^{®}, avec un résultat similaire.

### Exemple 8 : Obtention d'une mousse PU-PDA greffé de nanoparticules de TiO₂ (appelée PU-PDA-TiO₂) en une seule étape

Dans cet exemple, un catalyseur PU-PDA-TiO₂ a été obtenu en une seule étape par mise en contact d'une mousse cellulaire élastomère en polyuréthane avec une suspension de nanoparticules métalliques de dioxyde de titane dans une solution aqueuse de dopamine.

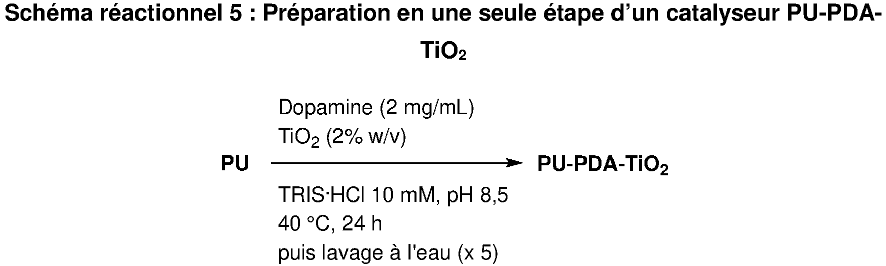

A une solution aqueuse de Tris.HCl 10 mM (pH 8,5) préparée selon l'exemple 1, est additionnée 2% (w/v) d'une nanopoudre commerciale de TiO₂ (de type anatase et de taille de particules d'environ 30 nm). Après agitation pendant 12 h à 1000 tours/minute en utilisant un agitateur magnétique, est additionné 2 mg/mL de chlorhydrate de 4-(2-aminoéthyl)-1,2-benzènediol (CAS : 62-31-7, appelé aussi chlorhydrate de dopamine). Dans cette suspension de nanoparticules de TiO₂ est immergée un échantillon de mousse de polyuréthane similaire à celui utilisé dans l'exemple 1, puis le mélange réactionnel est agité à environ 1000 tours/minute et chauffé à 40°C pendant 24 heures. La mousse de PU-PDA greffée avec les nanoparticules de TiO₂ (PU-PDA-TiO₂) est ensuite rincée avec de l'eau ultrapure MiliQ, puis agitée dans 50 mL d'eau MiliQ pendant 10 min. La procédure de lavage est répétée 5 fois. Le produit obtenu (PU-PDA-TiO₂) est séché par flux d'air comprimé, puis à l'étuve (60-70°C) pendant au moins 12 h.

## Revendications

1. Procédé de modification d'une mousse polymère cellulaire à porosité ouverte, de préférence en polyuréthane, comprenant les étapes suivantes :
a) on approvisionne une mousse polymère cellulaire à porosité ouverte (a), le diamètre équivalent moyen de l'ouverture des pores de la mousse polymère cellulaire étant compris entre 100 µm et 5000 µm ;
b) on met en contact ladite mousse polymère cellulaire avec au moins un composé (b) choisi parmi les composés comportant au moins un motif catéchol, et de préférence parmi les catécholamines, pour obtenir une mousse polymère cellulaire comprenant à sa surface une phase intermédiaire formée à partir dudit composé comportant au moins un motif catéchol.

2. Procédé selon la revendication 1, **caractérisé en ce que** ledit composé comportant au moins un motif catéchol est une catécholmonoamine.

3. Procédé selon la revendication 1, **caractérisé en ce que** ledit composé comportant au moins un motif catéchol est choisi parmi le groupe constitué de : l'acide caféique, l'hydroxyhydroquinone, le catéchol, le pyrogallol, l'épigallocatéchine, l'épigallocatéchine gallate, la catéchine et ses stéréoisomères et l'acide tannique.

4. Procédé selon l'une quelconque des revendications 1 à 3, **caractérisé en ce que** l'étape de mise en contact de ladite mousse polymère cellulaire (a) et du compose (b) est réalisée parmi l'une des techniques suivantes :
i) immersion de ladite mousse polymère cellulaire (a) dans une solution aqueuse de composé (b) ;
ii) imprégnation d'une solution aqueuse de composé (b) sur ladite mousse polymère cellulaire (a) ;
iii) pulvérisation partielle ou complète d'une solution aqueuse de composé (b) sur ladite mousse polymère cellulaire (a).

5. Procédé selon l'une quelconque des revendications 1 à 4, **caractérisé en ce que** la mousse polymère cellulaire (a) comporte des cellules de taille moyenne comprise entre 500 µm et 5000 µm, de préférence entre 2000 µm et 4500 µm, et encore plus préférentiellement entre 2500 µm et 4500 µm.

6. Procédé selon l'une quelconque des revendications 1, 2, 4 et 5, **caractérisé en ce que** le composé (b) choisi avantageusement parmi les catécholamines est le 4-(2-aminoéthyl)benzène-1,2-diol, ou un dérivé de celui-ci.

7. Procédé selon l'une quelconque des revendications 1 à 6, comprenant en outre une étape c) de fonctionnalisation de ladite mousse polymère cellulaire par dépôt d'une phase d'au moins un matériau (c) catalytiquement actif ou précurseur de phase catalytiquement active, ledit au moins un matériau (c) étant sélectionné dans le groupe constitué par :
- les complexes métalliques comportant au moins un groupement capable de former des liaisons covalentes avec le revêtement formé à partir du composé (b), et en particulier avec l'élément structural catéchol ou indole résultant de la cyclisation du bras alkylamine de la catécholamine lors de l'étape (b), par exemple un groupement trialkoxysilane, un groupement amine ou un groupement thiol, et plus particulièrement les composés de coordination ou molécules organométalliques des métaux de transition.
- les molécules organiques capables de catalyser une réaction, appelées organo-catalyseurs, comportant au moins un groupement capable de former des liaisons covalentes avec le revêtement formé à partir du composé (b).
- les nanoparticules métalliques, de préférence les nanoparticules métalliques choisies parmi celles de Ag, Fe, Co, Ni, Ru, Rh, Pd, Ir, Pt, Au, Ce, ou celles des oxydes mixtes associés à ces éléments, telles que Fe₂O₃, NiO₂, Ni₂O₃, CeO₂, ainsi que parmi celles d'autres oxydes, telles que TiO₂, ZnO, WO₃, SnO₂, ou toutes combinaisons possibles de ces nanoparticules.

8. Procédé selon la revendication 7, **caractérisé en ce que** les nanoparticules métalliques ont une taille moyenne de particules comprise entre 0,5 et 100 nm, de préférence entre 0,5 et 30 nm, et encore plus préférentiellement entre 0,5 et 15 nm.

9. Procédé selon la revendication 7 ou 8, **caractérisé en ce que** la phase catalytiquement active ou précurseur de phase catalytiquement active est déposée par l'une au moins des techniques suivantes :
- par imprégnation, par voie aérosol, ou par gouttelettes ;
- par dépôt chimique en phase vapeur ;
- par imprégnation capillaire.

10. Procédé selon les revendications 7 à 9, **caractérisé en ce que** l'étape de fonctionnalisation peut être réalisée après dépôt du composé (b) ou simultanément.

11. Procédé selon la revendication l'une quelconque des revendications 7 à 10, **caractérisé en ce que** l'étape de fonctionnalisation est réalisée à une température comprise entre 5 et 80°C, de préférence entre 15 et 60°C, et encore plus préférentiellement entre 15 et 50°C,

12. Mousse polymère cellulaire à porosité ouverte comprenant à sa surface une phase intermédiaire formée à partir d'au moins un composé (b)comportant au moins un motif catéchol, ladite mousse polymère cellulaire à porosité ouverte présentant un diamètre équivalent moyen de l'ouverture des pores compris entre 100 µm et 5000 µm.

13. Mousse polymère cellulaire selon la revendication 12, **caractérisée en ce qu'**elle est en outre fonctionnalisée par dépôt d' une phase d'au moins un matériau (c) catalytiquement actif ou précurseur de phase catalytiquement active, ledit au moins un matériau (c) catalytiquement actif ou précurseur de phase catalytiquement active est sélectionné dans le groupe constitué par :
- les complexes métalliques comportant au moins un groupement capable de former des liaisons covalentes avec le revêtement formé à partir du composé (b), et en particulier avec l'élément structural catéchol ou indole résultant de la cyclisation du bras alkylamine de la catécholamine lors de l'étape (b), par exemple un groupement trialkoxysilane, un groupement amine ou un groupement thiol, et plus particulièrement les composés de coordination ou molécules organométalliques des métaux de transition.
- les molécules organiques capables de catalyser une réaction, appelées organo-catalyseurs, comportant au moins un groupement capable de former des liaisons covalentes avec le revêtement formé à partir du composé (b).
- les nanoparticules métalliques, de préférence les nanoparticules métalliques choisies parmi celles de Ag, Fe, Co, Ni, Ru, Rh, Pd, Ir, Pt, Au, Ce, ou celles des oxydes mixtes associés à ces éléments, telles que Fe2O3, NiO2, Ni2O3, CeO2, ainsi que parmi celles d'autres oxydes, telles que TiO2, ZnO, WO3, SnO2, ou toutes combinaisons possibles de ces nanoparticules.

14. Mousse polymère cellulaire selon la revendication 12 ou selon la revendication 13, **caractérisée en ce qu'**elle se présente sous la forme d'un bloc ou d'une plaque dont la plus petite dimension externe est d'au moins trois fois (et de préférence d'au moins cinq fois) la taille moyenne des cellules.

15. Utilisation d'une mousse polymère cellulaire porosité ouverte susceptible d'être obtenue par le procédé selon l'une quelconque des revendications 1 à 6 comme support de catalyseur.

16. Utilisation d'une mousse polymère cellulaire fonctionnalisée à porosité ouverte susceptible d'être obtenue par le procédé selon l'une quelconque des revendications 7 à 11 en tant que catalyseur, et plus particulièrement en tant que catalyseur homogène supporté et/ou hétérogène.

## Patentansprüche

1. Verfahren zum Modifizieren eines zellulären Polymerschaums mit offener Porosität, vorzugsweise aus Polyurethan, das die folgenden Schritte umfasst:
a) Bereitstellen eines zellulären Polymerschaums mit offener Porosität (a), wobei der durchschnittliche äquivalente Durchmesser der Porenöffnung des zellulären Polymerschaums zwischen 100 µm und 5000 µm liegt;
b) Inkontaktbringen des zellulären Polymerschaums mit mindestens einer Verbindung (b), die aus Verbindungen, die mindestens eine Catechol-Einheit umfassen, und vorzugsweise aus den Catecholaminen ausgewählt ist, um einen zellulären Polymerschaum zu erhalten, der auf seiner Oberfläche eine Zwischenphase umfasst, die aus der Verbindung gebildet wird, die mindestens eine Catechol-Einheit umfasst.

2. Verfahren nach Anspruch 1, **dadurch gekennzeichnet, dass** die Verbindung, die mindestens eine Catechol-Einheit aufweist, ein Catecholmonoamin ist.

3. Verfahren nach Anspruch 1, **dadurch gekennzeichnet, dass** die Verbindung, die mindestens eine Catechol-Einheit umfasst, aus der Gruppe ausgewählt ist, die aus Folgendem besteht: Kaffeesäure, Hydroxyhydrochinon, Catechol, Pyrogallol, Epigallocatechin, Epigallocatechingallat, Catechin und seine Stereoisomere und Gerbsäure.

4. Verfahren nach einem der Ansprüche 1 bis 3, **dadurch gekennzeichnet, dass** der Schritt des Inkontaktbringens des zellulären Polymerschaums (a) und der Verbindung (b) mit einer der folgenden Methoden durchgeführt wird:
i) Eintauchen des zellulären Polymerschaums (a) in eine wässrige Lösung der Verbindung (b);
ii) Imprägnieren des zellulären Polymerschaums (a) mit einer wässrigen Lösung der Verbindung (b);
iii) teilweises oder vollständiges Sprühen einer wässrigen Lösung der Verbindung (b) auf den zellulären Polymerschaum (a).

5. Verfahren nach einem der Ansprüche 1 bis 4, **dadurch gekennzeichnet, dass** der zelluläre Polymerschaum (a) Zellen mit einer durchschnittlichen Größe zwischen 500 µm und 5000 µm, vorzugsweise zwischen 2000 µm und 4500 µm und noch bevorzugter zwischen 2500 µm und 4500 µm aufweist.

6. Verfahren nach einem der Ansprüche 1, 2, 4 und 5, **dadurch gekennzeichnet, dass** die Verbindung (b), die vorteilhafterweise aus den Catecholaminen ausgewählt ist, 4-(2-Aminoethyl)benzol-1,2-diol oder ein Derivat davon ist.

7. Verfahren nach einem der Ansprüche 1 bis 6, das ferner einen Schritt c) des Funktionalisierens des zellulären Polymerschaums durch Abscheiden einer Phase mindestens eines katalytisch aktiven Materials (c) oder eines Vorläufers der katalytisch aktiven Phase umfasst, wobei das mindestens eine Material (c) aus der Gruppe ausgewählt ist, die aus Folgendem besteht:
- die Metallkomplexe, die mindestens eine Gruppierung aufweisen, die in der Lage ist, kovalente Bindungen mit der aus der Verbindung (b) gebildeten Beschichtung und insbesondere mit dem Catechol- oder Indol-Strukturelement zu bilden, das sich aus der Cyclisierung des Alkylaminarms des Catecholamins bei Schritt (b) ergibt, beispielsweise eine Trialkoxysilangruppierung, eine Amingruppierung oder eine Thiolgruppierung, und insbesondere die Koordinationsverbindungen oder metallorganische Moleküle von Übergangsmetallen,
- die organischen Moleküle, die in der Lage sind, eine Reaktion, auch Organokatalysatoren genannt, zu katalysieren, die mindestens eine Gruppierung aufweisen, die in der Lage ist, kovalente Bindungen mit der aus Verbindung (b) gebildeten Beschichtung zu bilden,
- die Metallnanopartikel, vorzugsweise die Metallnanopartikel, die aus Ag, Fe, Co, Ni, Ru, Rh, Pd, Ir, Pt, Au, Ce oder solchen der mit diesen Elementen verbundenen Mischoxide, wie Fe₂O₃, NiO₂, Ni₂O₃, CeO₂, sowie auch aus anderen Oxiden, wie TiO₂, ZnO, WO₃, SnO₂, oder allen möglichen Kombinationen dieser Nanopartikel ausgewählt sind.

8. Verfahren nach Anspruch 7, **dadurch gekennzeichnet, dass** die Metallnanopartikel eine durchschnittliche Partikelgröße zwischen 0,5 und 100 nm, vorzugsweise zwischen 0,5 und 30 nm und noch bevorzugter zwischen 0,5 und 15 nm aufweisen.

9. Verfahren nach Anspruch 7 oder 8, **dadurch gekennzeichnet, dass** die katalytisch aktive Phase oder der Vorläufer der katalytisch aktiven Phase durch mindestens eine der folgenden Methoden abgeschieden wird:
- durch Imprägnierung, durch Aerosol oder durch Tröpfchen;
- durch chemische Gasphasenabscheidung;
- durch Kapillar-Imprägnierung.

10. Verfahren nach den Ansprüchen 7 bis 9, **dadurch gekennzeichnet, dass** der Schritt des Funktionalisierens nach dem Abscheiden der Verbindung (b) oder gleichzeitig damit durchgeführt werden kann.

11. Verfahren nach einem der Ansprüche 7 bis 10, **dadurch gekennzeichnet, dass** der Schritt des Funktionalisierens bei einer Temperatur zwischen 5 und 80 °C, vorzugsweise zwischen 15 und 60 °C und noch bevorzugter zwischen 15 und 50 °C durchgeführt wird.

12. Zellulärer Polymerschaum mit offener Porosität, der auf seiner Oberfläche eine Zwischenphase umfasst, die aus mindestens einer Verbindung (b), die mindestens eine Catechol-Einheit aufweist, ausgebildet ist, wobei der zelluläre Polymerschaum mit offener Porosität einen durchschnittlichen äquivalenten Durchmesser der Porenöffnung zwischen 100 µm und 5000 µm aufweist.

13. Zellulärer Polymerschaum nach Anspruch 12, **dadurch gekennzeichnet, dass** er durch das Abscheiden einer Phase aus mindestens einem katalytisch aktiven Material (c) oder eines Vorläufers der katalytisch aktiven Phase funktionalisiert wird, wobei das mindestens eine katalytisch aktive Material (c) oder der Vorläufer der katalytisch aktiven Phase in der Gruppe ausgewählt ist, die aus Folgendem besteht:
- die Metallkomplexe, die mindestens eine Gruppierung aufweisen, die in der Lage ist, kovalente Bindungen mit der aus der Verbindung (b) gebildeten Beschichtung und insbesondere mit dem Catechol- oder Indol-Strukturelement zu bilden, das sich aus der Cyclisierung des Alkylaminarms des Catecholamins bei Schritt (b) ergibt, beispielsweise eine Trialkoxysilangruppierung, eine Amingruppierung oder eine Thiolgruppierung, und insbesondere die Koordinationsverbindungen oder metallorganische Moleküle von Übergangsmetallen,
- die organischen Moleküle, die in der Lage sind, eine Reaktion, auch Organokatalysatoren genannt, zu katalysieren, die mindestens eine Gruppierung aufweisen, die in der Lage ist, kovalente Bindungen mit der aus Verbindung (b) gebildeten Beschichtung zu bilden,
- die Metallnanopartikel, vorzugsweise die Metallnanopartikel, die aus Ag, Fe, Co, Ni, Ru, Rh, Pd, Ir, Pt, Au, Ce oder solchen der mit diesen Elementen verbundenen Mischoxide, wie Fe₂O₃, NiO₂, Ni₂O₃, CeO₂, sowie auch aus anderen Oxiden, wie TiO₂, ZnO, WO₃, SnO₂, oder allen möglichen Kombinationen dieser Nanopartikel ausgewählt sind.

14. Zellulärer Polymerschaum nach Anspruch 12 oder nach Anspruch 13, **dadurch gekennzeichnet, dass** er in Form eines Blocks oder einer Platte vorliegt, dessen bzw. deren kleinste Außenabmessung mindestens das Dreifache (und vorzugsweise mindestens das Fünffache) der durchschnittlichen Zellengröße ist.

15. Verwendung eines zellulären Polymerschaums mit offener Porosität, der durch das Verfahren nach einem der Ansprüche 1 bis 6 als Katalysatorträger erhalten werden kann.

16. Verwendung eines funktionalisierten zellulären Polymerschaums mit offener Porosität, der durch das Verfahren nach einem der Ansprüche 7 bis 11 als Katalysator und insbesondere als geträgerter und/oder heterogener homogener Katalysator erhalten werden kann.

## Claims

1. A method for modifying a cellular polymer foam with apparent porosity, preferably made from polyurethane, comprising the following steps:
a) supplying a cellular polymer foam with apparent porosity (a), the mean equivalent diameter of the opening of the pores of the cellular polymer foam being comprised between 100 µm and 5,000 µm;
b) placing said cellular polymer foam in contact with at least one compound (b) chosen from among compounds including at least one catechol unit, and preferably from among catecholamines, to obtain a cellular polymer foam comprising, on its surface, an intermediate phase formed from said compound including at least one catechol unit.

2. The method according to claim 1, characterized inthat said compound including at least one catechol unit is a catecholmonoamine.

3. The method according to claim 1, **characterized in that** said compound including at least one catechol unit is chosen from the group formed by: caffeic acid, hydroxyhydroquinone, catechol, pyrogallol, epigallocatechin, epigallocatechin gallate, catechin and its stereoisomers, and tannic acid.

4. The method according to any one of claims 1 to 3, **characterized in that** the step for placing said cellular polymer foam (a) and the compound (b) in contact is done from among one of the following techniques:
i) immersing said cellular polymer foam (a) in an aqueous solution of compound (b),
ii) impregnating an aqueous solution of compound (b) on said cellular polymer foam (a),
iii) partial or complete spraying of an aqueous solution of compound (b) on said cellular polymer foam (a).

5. The method according to any one of claims 1 to 4, **characterized in that** said cellular polymer foam (a) comprises cells with a mean size comprised between 500 µm and 5,000 µm, preferably between 2,000 µm and 4,500 µm, and still more preferably between 2,500 µm and 4,500 µm.

6. The method according to any one of claims 1, 2, 4 and 5, **characterized in that** compound (b) advantageously chosen from among catecholamines is 4-(2-aminoethyl) benzene-1,2-diol or a derivative thereof.

7. The method according to any one of claims 1 to 6, further including a step c) for functionalizing said cellular polymer foam by depositing a phase of at least one catalytically active material (c) or catalytically active phase precursor, said at least one material (c) being selected from the group made up of:
- metal complexes including at least one group capable of forming covalent bonds with the coating formed from compound (b), in particular, with the catechol or indole structural element resulting from the cyclization of the alkylamine arm of the catecholamine during step (b), for example a trialkoxysilane group, an amine group or a thiol group, and more particularly the coordinating compounds or organometallic molecules of the transition metals;
- organic molecules capable of catalyzing a reaction, called organocatalysts, including at least one group capable of forming covalent bonds with the coating formed from compound (b);
- metal nanoparticles, preferably metal nanoparticles chosen from among Ag, Fe, Co, Ni, Ru, Rh, Pd, Ir, Pt, Au, Ce, or those of mixed oxides associated with these elements, such as Fe₂O₃, NiO₂, Ni₂O₃, CeO₂, as well as from among those of other oxides, such as TiO₂, ZnO, WO₃, SnO₂, or any possible combinations of these nanoparticles.

8. The method according to claim 7, **characterized in that** the metal nanoparticles have a mean particle size comprised between 0.5 and 100 nm, preferably 0.5 and 30 nm, and still more preferably between 0.5 and 15 nm.

9. The method according to claim 7 or 8, **characterized in that** the phase catalytically active or catalytically active phase precursor is deposed by using at least one of the following techniques:
- impregnation, aerosol, or droplets;
- chemical vapor deposition;
- capillary impregnation.

10. The method according to claims 7 to 9, **characterized in that** the functionalization step is carried out after depositing compound (b) or at the same time.

11. The method according to any one of claims 7 to 10, **characterized in that** the functionalization step is carried out at a temperature comprised between 5 and 80°C, preferably between 15 and 60°C, and still more preferably between 15 and 50°C.

12. A cellular polymer foam with apparent porosity, comprising at its surface an intermediate phase formed from at least one compound (b) including at least one catechol unit, said cellular polymer foam with apparent porosity having a mean equivalent diameter of the opening of the pores comprised between 100 µm and 5,000 µm.

13. The cellular polymer foam according to claim 12, **characterized in that** it is further functionalized by deposition of a phase of at least one catalytically active material (c) or catalytically active phase precursor, said at least one catalytically active material (c) or catalytically active phase precursor is selected from the group made up of:
- metal complexes including at least one group capable of forming covalent bonds with the coating formed from compound (b), in particular, with the catechol or indole structural element resulting from the cyclization of the alkylamine arm of the catecholamine during step (b), for example a trialkoxysilane group, an amine group or a thiol group, and more particularly the coordinating compounds or organometallic molecules of the transition metals;
- organic molecules capable of catalyzing a reaction, called organocatalysts, including at least one group capable of forming covalent bonds with the coating formed from compound (b);
- metal nanoparticles, preferably metal nanoparticles chosen from among Ag, Fe, Co, Ni, Ru, Rh, Pd, Ir, Pt, Au, Ce, or those of mixed oxides associated with these elements, such as Fe₂O₃, NiO₂, Ni₂C₃, CeO₂, as well as from among those of other oxides, such as TiO₂, ZnO, WO₃, SnO₂, or any possible combinations of these nanoparticles.

14. The polymer cellular foam according to claim 12 or 13, **characterized in that** it assumes the form of a block or plate, the smaller outer dimension of which is at least three times (and preferably at least five times) the mean size of the cells.

15. A use of a cellular polymer foam with apparent porosity able to be obtained by the method according to any one of claims 1 to 6 as a catalyst substrate.

16. A use of a functionalized cellular polymer foam with apparent porosity able to be obtained by the method according to any one of claims 7 to 11 as a catalyst, and more particularly as a supported homogenous and/or heterogeneous catalyst.
